# EUROPEAN PATENT APPLICATION

(11) **EP 1 775 931 A2**
(43) Date of publication of application: **18.04.2007**
(21) Application number: 06110535.9
(22) Date of filing: 28.02.2006
(51) Int. Cl.: H04N 1/32

(54) **ENCODING APPARATUS, DECODING APPARATUS, ENCODING METHOD, COMPUTER PRODUCT , AND PRINTED MATERIAL**

(30) Priority: 13.10.2005 JP 2005299349
(71) Applicant: FUJITSU LIMITED, Kawasaki-shi, Kanagawa 211-8588 (JP)
(72) Inventor: CHIBA, Hirotaka, FUJITSU LIMITED, Kawasaki-shi Kanagawa 211-8588 (JP); NODA, Tsugio, FUJITSU LIMITED, Kawasaki-shi Kanagawa 211-8588 (JP)
(74) Representative: Kreutzer, Ulrich

(57) **Abstract**

A first encoder splits an image into a plurality of blocks, and embeds a first data into the image based on a difference between feature amounts in a combination of the blocks. A second encoder encodes a second data in a form of a combination of image patterns. A disposing unit disposes the combination of image patterns in the image in which the data is embedded by the first encoder.

## Description

### BACKGROUND OF THE INVENTION

### 1. Field of the Invention

The present invention relates to a technology for embedding a large amount of data in an image and extracting the data from the image.

### 2. Description of the Related Art

As disclosed in US Patent No 5636292 and Japanese Patent Application Laid-Open No 2000-299779, a conventional technology to embed data (code etc.) into image data or sound data is applied to prevent counterfeiting and unauthorized use of the image data or the sound data, and to provide additional services. For example, a method to read a digital watermark embedded into a printed material and to display a specified web page is disclosed in US Patent No 5841978.

An encoding method is disclosed in Japanese Patent Application Laid-Open No 2004-349879 in which an image is split into a plurality of blocks. A difference between average densities of adjacent blocks is used to embed codes into the adjacent block pairs. After the image, which includes the embedded codes, is output to a paper or a display device etc., the image is input by using an input unit such as a camera and subjected to a decoding process. In the decoding process, the original codes are decoded from the difference between the average densities of the adjacent blocks of the input image.

In the encoding and decoding method disclosed in Japanese Patent Application Laid-Open No 2004-349879, decoding is carried out only by using the difference between the average densities of the adjacent blocks of the input image, thereby enabling to enhance the speed of the decoding process. Due to this, a decoder based on the aforementioned decoding method is increasingly mounted on a portable device.

However, in the encoding method disclosed in Japanese Patent Application Laid-Open No 2004-349879, length of data that can be embedded into the image is comparatively short. In the embedding method disclosed in Japanese Patent Application Laid-Open No 2004-349879, when splitting the image, the size of the blocks exceeds a predetermined size, and the same data is embedded multiple times to ensure sufficient reading accuracy, thereby limiting the amount of data.

### SUMMARY OF THE INVENTION

It is an object of the present invention to solve at least the above problems in the conventional technology.

An encoding apparatus that creates an image in which data is embedded, according to one aspect of the present invention, includes a first encoder that splits an image into a plurality of blocks, and embeds a first data into the image based on a difference between feature amounts in a combination of the blocks; a second encoder that encodes a second data in a form of a combination of image patterns; and a disposing unit that disposes the combination of image patterns in the image in which the data is embedded by the first encoder.

A decoding apparatus that extracts data embedded in an image, according to another aspect of the present invention, includes a first decoder that splits the image into a plurality of blocks, and extracts a first data that is embedded into the image based on a difference between feature amounts in a combination of the blocks; and a second decoder that extracts a second data from a combination of image patterns that is disposed in the image.

An encoding method of creating an image in which data is embedded, according to still another aspect of the present invention, includes first encoding including splitting an image into a plurality of blocks, and embedding a first data into the image based on a difference between feature amounts in a combination of the blocks; second encoding including encoding a second data in a form of a combination of image patterns; and disposing the combination of image patterns in the image in which the data is embedded at the first encoding.

A computer-readable recording medium according to still another aspect of the present invention stores a computer program for creating an image in which data is embedded. The computer program causes a computer to execute the above encoding method according to the present invention.

A printed material according to still another aspect of the present invention includes an image in which data is embedded. The image is created by a first encoder that splits an image into a plurality of blocks, and embeds a first data into the image based on a difference between feature amounts in a combination of the blocks; a second encoder that encodes a second data in a form of a combination of image patterns; and a disposing unit that disposes the combination of image patterns in the image in which the data is embedded by the first encoder.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a block diagram of an encoder that embeds a code into an image;
Fig. 2 is a schematic for illustrating an example of a block-split image data;
Fig. 3 is a diagram for explaining a density modifying process by a code forming unit;
Fig. 4 is a schematic for illustrating a principle of an encoding method according to an embodiment of the present invention;
Figs. 5 to 8 are schematics for illustrating examples of a combination of data that is encoded by the encoding method according to the present embodiment;
Fig. 9 is a schematic for illustrating a case in which a first code and a second code that are output separately;
Figs. 10 and 11 are schematics for illustrating examples a disposal of a code in the encoding method according to the present embodiment;
Fig. 12 is a block diagram of an encoding apparatus according to the present embodiment;
Fig. 13 is a block diagram of a data reading apparatus according to the present embodiment;
Fig. 14 is a flowchart of a processing procedure for the encoding apparatus shown in Fig. 12; and
Fig. 15 is a block diagram of a computer to execute an encoding program.

### DETAILED DESCRIPTION OF THE PREFERRED EMBODIMENTS

Exemplary embodiments of the present invention are explained in detail below with reference to the accompanying drawings.

According to an embodiment of the present invention, an encoder embeds a 16-bit code eight times into original image data to generate image data having encoded codes. The original image data is image data generated in a predetermined format such as Joint Photographic Expert Group (JPEG), Graphics Interchange Format (GIF) etc. and has a size of 1024 by 1024 pixels. A 16-bit code such as "1010110101001010" is embedded into the original image data.

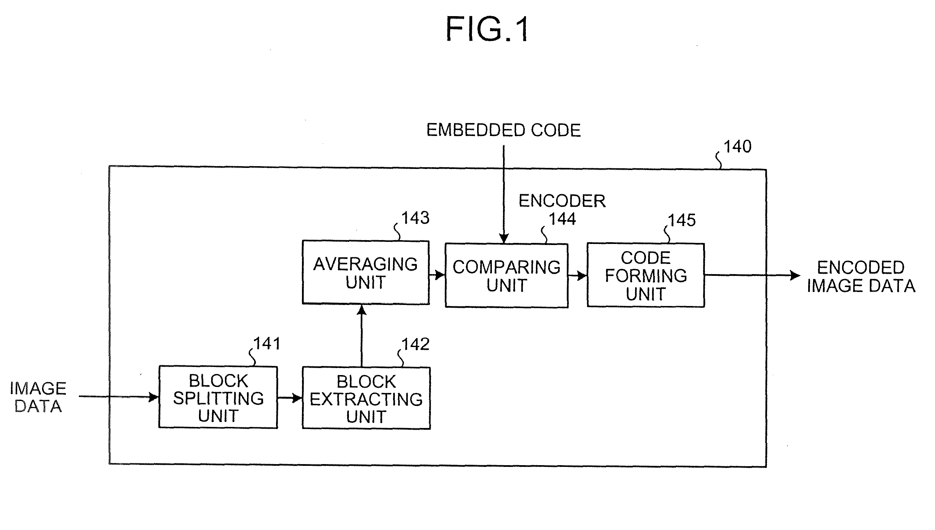

Fig. 1 is a block diagram of an encoder 140 that embeds a code into an image. The encoder 140 includes a block splitting unit 141, a block extracting unit 142, an averaging unit 143, a comparing unit 144, and a code forming unit 145.

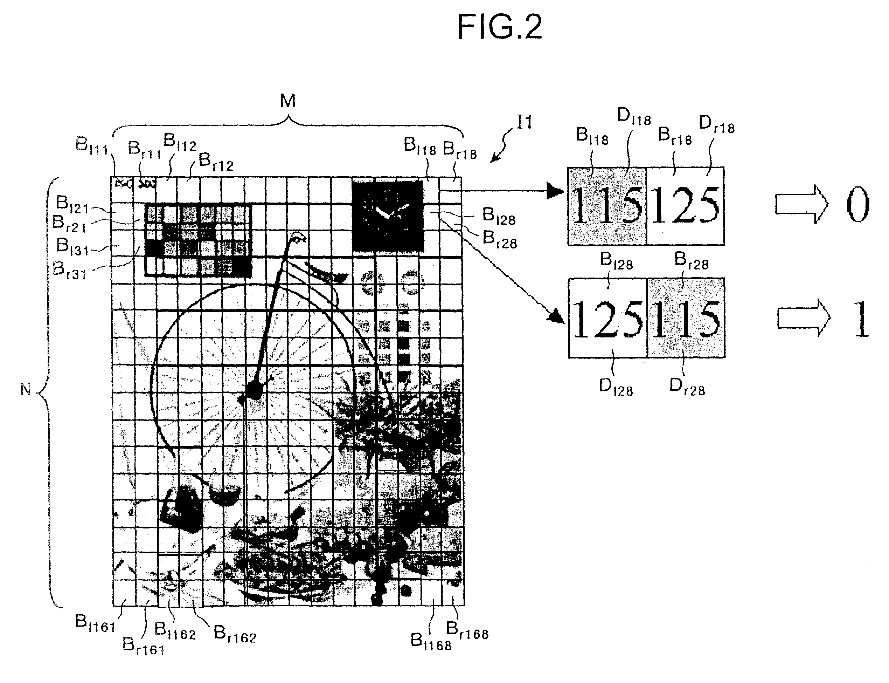

The block splitting unit 141 inputs the original image data, splits the original image data into blocks of N lines and M rows (16 lines and 16 rows in the example explained in the present embodiment), and outputs the image data as block-split image data I1. Fig. 2 is a schematic of an example of the block-split image data I1. The block-split image data I1 includes 256 blocks (16 lines and 16 rows) such as blocks Bₗ₁₁, Bᵣ₁₁, ... , Bₗ₁₈, Bᵣ₁₈, Bₗ₂₁, Bᵣ₂₁, ... ,Bₗ₁₆₈, Bᵣ₁₆₈ and so on. A single block has a size of 64 by 64 pixels.

In the block-split image data I1, 1 bit code is embedded into a pair block (two adjacent blocks).

The pair blocks are formed of two blocks such as blocks Bₗ₁₁ and Bᵣ₁₁, blocks Bₗ₁₂ and Bᵣ₁₂, ... , blocks Bₗ₁₈ and Bᵣ₁₈ (forming the first line), blocks Bₗ₂₁ and Bᵣ₂₁, ... , blocks Bₗ₂₈ and Bᵣ₂₈ (forming the second line), ... , blocks Bₗ₁₆₁ and Bᵣ₁₆₁, ... , blocks Bₗ₁₆₈ and Bᵣ₁₆₈ (forming the sixteenth line).

In a block B_{lxy} of a pair block, a subscript 1 indicates that the block B_{lxy} is a left block, a subscript x indicates a line (N), and a subscript y indicates a row (M). Similarly, in a block B_{rxy} of the pair block, a subscript r indicates that the block B_{rxy} is a right block, a subscript x indicates a line (N), and a subscript y indicates a row (M).

In a pair block, a feature quantity in the form of an average density level (average grayscale of each pixel in the block is between 0 and 255) of the left block B_{lxy} is indicated by a left average density data Dₗ. An average density level (feature quantity) of the right block B_{rxy} is indicated by a right average density data Dᵣ.

If the left average density data Dₗ is less than the right average density data Dᵣ, 1 bit code of the pair block is represented as "0". If the left average density data D, is greater than the right average density data Dᵣ, 1 bit code of the pair block is represented as "1".
D₁<Dᵣ→"0"
D₁≥Dᵣ→"1"

For example, as shown in Fig. 2, in a pair block consisting of blocks Bₗ₁₈ and Bᵣ₁₈, because a left average density data Dₗ₁₈ is "115" and a right average density data Dᵣ₁₈ is "125", 1 bit code of the pair block is represented by "0".

Similarly, in a pair block consisting of blocks Bₗ₂₈ and Bᵣ₂₈, because a left average density data Dₗ₂₈ is "125" and a right average density data Dᵣ₂₈ is "115", 1 bit code of the pair block is represented by "1".

In the block-split image data I1, because a single line includes eight pair blocks (16 blocks), one line is represented by 8 bit code. Thus, all the lines (16 lines) in the block-split image data I1 are represented by 128 bit codes. In the first embodiment, because codes C, which are embedded into the block-split image data I1 include 16 bits, the codes C can be embedded into the block-split image data I1 a maximum eight times (128 divided by 16).

Referring back to Fig. 1, the block extracting unit 142 sequentially extracts pair blocks (block B_{lxy} and block B_{rxy}) according to bit shift of the codes C, and sequentially outputs density distributions of the block B_{lxy} and the block B_{rxy} as block density data D.

The bit shift of the codes C indicates bit by bit shifting of bit pointers of the codes C from a bit at the extreme left (1) towards a bit at the extreme right (0) of the codes C.

The averaging unit 143 computes the left average density data Dₗ corresponding to the block B_{lxy} and the right average density data Dᵣ corresponding to the block B_{rxy} from the block density data D.

The comparing unit 144 compares nth bit of the codes C (such that n=1, 2, ..., 16 beginning from the bit at the extreme left) with a bit determination result that is determined from a magnitude relation between the left average density data Dₗ and the right average density data Dᵣ (based on the aforementioned relational expression, bit is determined as "0" or "1").

Based on the comparison result of the comparing unit 144, the code forming unit 145 embeds the codes C into the block-split image data I1 (the original image data). To be specific, if the comparison result of the comparing unit 144 is matching, the code forming unit 145 maintains the magnitude relation between the left average density data Dₗ and the right average density data Dᵣ. If the comparison result of the comparing unit 144 is not matching, the code forming unit 145 carries out a density modifying process to modify (reverse the magnitude relation) the left average density data Dₗ and the right average density data Dᵣ such that the magnitude relation between the left average density data Dₗ and the right average density data Dᵣ represents bits of the codes C, generates image data having the encoded codes (hereinafter, "encoded image data"), and outputs the encoded image data.

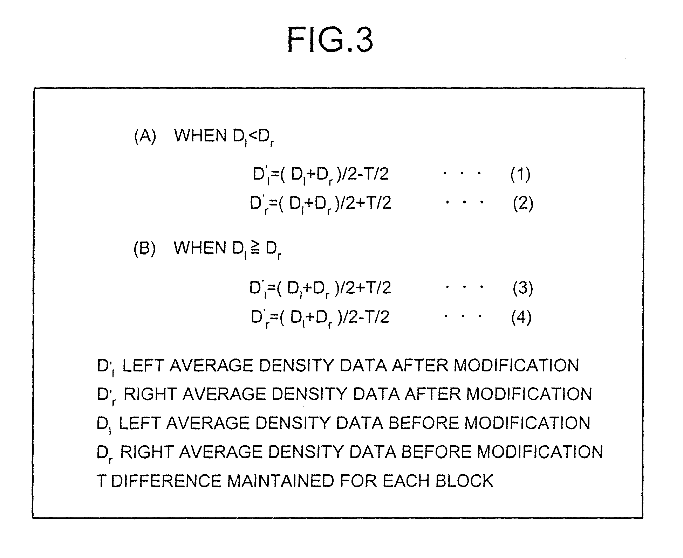

Fig. 3 is a diagram for explaining a density modifying process by the code forming unit 145. In the density modifying process, if Dₗ is less than Dᵣ, a left average density data D'ₗ after modification is computed by using the expression (1), and a right average density data D'ᵣ after modification is computed by using the expression (2). T indicates a level difference between the pair block, and has a value such as "30" for example. Due to this, after density modification, the left average density data D'ₗ becomes less than the right average density data D'ᵣ, and the bit determination result is changed from "1" to "0".

If is greater than or equal to Dᵣ, a left average density data D'ₗ after modification is computed by using the expression (3), and a right average density data D'ᵣ after modification is computed by using the expression (4). Due to this, after density modification, the left average density data D'ₗ becomes greater than the right average density data D'ᵣ, and the bit determination result is changed from "0" to "1".

Using the average density as a feature quantity to embed codes into the image data is explained in the present embodiment. However, codes can also be embedded into the image data by using other feature quantities related to image such as amount of granulation, color saturation, density equilibrium, dispersion etc.

Using the difference of feature quantity between the pair blocks to represent bits is explained in the present embodiment. However, bits can also be represented by using difference of feature quantity between other combinations of blocks.

Thus, by splitting the image data into blocks and using the difference of feature quantity pertaining to combinations of blocks codes can be embedded into the image data. Because the aforementioned method does not need a complex computation process such as fast Fourier transformation during encoding or decoding, the aforementioned method can be realized by using a low speed data processor.

However, the feature quantity pertaining to the combinations of blocks is affected due characteristics of an output unit, an output medium and an input unit, thereby preventing accurate reading of the embedded codes. For example, when printing the image data having embedded codes on a paper, the decoding apparatus cannot identify a difference between densities of blocks having densities that exceed a predetermined value.

In the above example, the same codes are embedded eight times into a single image data to eliminate influence due to characteristics of the output unit and to secure reading accuracy of the embedded codes. Moreover, the size of a single block is increased to 64 by 64 pixels. Thus, although increasing the block size and embedding the same codes multiple times increases reading accuracy, the size of codes that can be embedded is reduced.

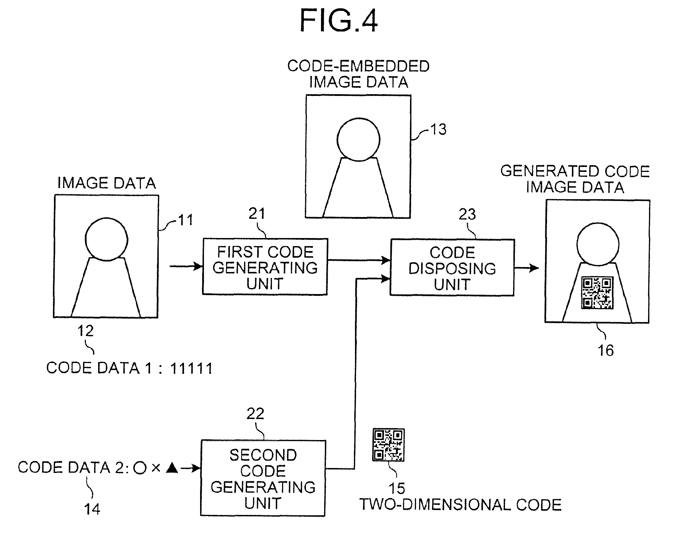

Fig. 4 is a schematic for illustrating a principle of an encoding method according to the present embodiment. In the encoding method according to the present embodiment, a code disposing unit 23 overlaps and disposes code-embedded image data 13 that includes codes that are embedded by a first code generating unit 21 and a two-dimensional code 15 that is generated by a second code generating unit 22.

The first code generating unit 21 which corresponds to the encoder 140 embeds code data 12 into image data 11 to generate the code-embedded image data 13. Because the amount of data that is embedded into the code-embedded image data 13 is small, data can be easily extracted from the code-embedded image data 13 that is generated by the first code generating unit 21.

Further, in encoding by the first code generating unit 21, embedded data can be easily analogized according to a relation with the image. For example, if the image data pertaining to a facial photograph of an employee includes an embedded employee number of the employee, the image data and the corresponding embedded employee number can be easily analogized from the contents of the image data even if multiple image data having embedded codes are used.

The second code generating unit 22 is an encoder for a two-dimensional code, and encodes code data 14 to generate the two-dimensional code 15. The two-dimensional code encodes data as a combination of two dimensional forms. In the two-dimensional code, the amount of data per unit area is small, thereby enabling to easily decode the two-dimensional code. However, because data is represented as a combination of two dimensional forms, identifying the data before encoding from the encoding result is difficult.

The code-embedded image data 13 that includes codes embedded by the first code generating unit 21 and the two-dimensional code 15 that are generated by the second code generating unit are overlapped and disposed, thereby enabling to get an encoding result that combines the advantages provided by the two code generating units and complements the drawbacks pertaining to the two code generating units.

In other words, the encoding method according to the present embodiment enables to get an encoding result such that contents of the encoded data can be easily analogized according to a relation with the image, the amount of the encoded data is large, and the encoded data can be easily decoded. Because the first code generating unit 21 embeds the same data into the image data multiple times, the image data can be read even if the two-dimensional code is disposed in a portion of the image data.

The second code generating unit 22 need not always be an encoder pertaining to the two-dimensional code. An encoder pertaining to one dimensional codes such as bar codes or any other encoder that encodes data in image form can be used as the second code generating unit 22 (hereinafter, a code generated as a result of encoding by the second code generating unit 22 will be called "two-dimensional code").

The data that is encoded by the second code generating unit 22 need not be a single data. The second code generating unit 22 can encode multiple data and dispose multiple two-dimensional codes. in the image data. Encoding results from multiple code generating units can also be disposed in the image data.

An example pertaining to a combination of data that is encoded by the first code generating unit 21 and data that is encoded by the second code generating unit 22 is explained next. The encoding method according to the present embodiment enables to encode two types of data and to get different results according to the combination of the two types of data.

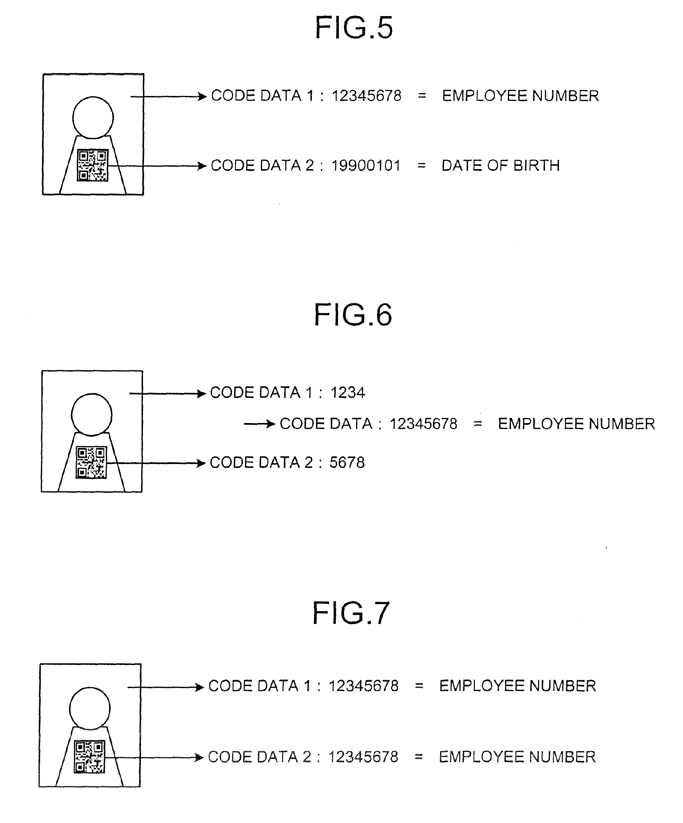

Figs. 5 to 8 are schematics for illustrating examples of a combination of data that is encoded by the encoding method according to the present embodiment.

As shown in Fig. 5, the first code generating unit 21 encodes an employee number, and the second code generating unit 22 encodes the date of birth of the same employee. Thus, related multiple data are encoded and stored in the single image data, thereby enabling to use the resulting image data for various purposes.

Provision of data can also be controlled. For example, a large number of unspecified users can be provided with a decoder that enables to decode data that is encoded by the first code generating unit 21, and only specified users can be provided with a decoder that enables to decode data that is encoded by the second code generating unit 22, thereby enabling to get the image data such that a portion of the data can be decoded by a large number of unspecified users and a portion of the data can be decoded only by the specified users.

As shown in Fig. 6, the first code generating unit 21 encodes a first half of the employee number and the second code generating unit 22 encodes a second half of the employee number. Thus, a single data can be split and encoded, thereby enabling to store in the image data, a large amount of data that cannot be encoded by using a single code generating unit.

The original data cannot be fetched without combining the two portions of data that are split and stored, thereby making it difficult for an unauthorized user to get the data.

As shown in Fig. 7, the first code generating unit 21 encodes the employee number and the second code generating unit 22 also encodes the same employee number. Thus, by encoding the same data and checking whether the encoded data are matching during decoding enables to confirm the accuracy of the decoded data.

Storing the same data into the single image data also enables to effectively prevent illegal falsification of data by the unauthorized user. For example, if an encoding apparatus that generates standardized two-dimensional code is used as the second code generating unit 22, the unauthorized user may attempt to falsify data by generating an illegal two-dimensional code and pasting the illegal two-dimensional code in the printed image data. However, by checking whether the two data are matching during decoding enables to detect falsification of data.

The second code generating unit 22 encodes the data that is to be encoded and the first code generating unit 21 encodes a cyclic-redundancy-check (CRC) code for detecting an error in the encoded data. Thus, using the CRC code etc. to detect an error during decoding also enables to get similar results.

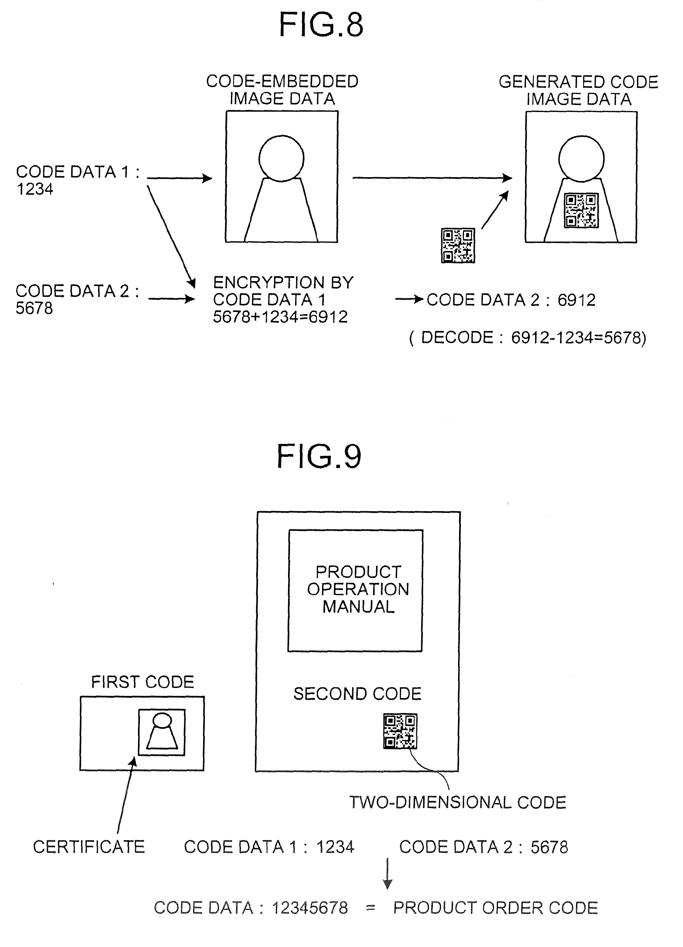

As shown in Fig. 8, the first code generating unit 21 encodes an encryption key and the second code generating unit 22 encodes data that is encrypted by using the encryption key. Thus, encoding the encryption key and the data that is encrypted using the encryption key enables to store confidential data in the image data. Using the encryption key during decoding can restore the confidential data.

Thus, in the encoding method according to the present embodiment, the second code generating unit 22 encodes data into the two-dimensional code, thereby enabling to store a large amount of data in the image data. By using the encoding method according to the present embodiment, the second code generating unit 22 can easily realize the standardized encoding method that generates highly confidential two-dimensional code.

However, if the standardized encoding method is applied to the second code generating unit 22, the unauthorized user can easily fetch the data that is stored in the image data. To overcome this drawback, the second code generating unit 22 encodes the data that is encrypted by the encryption key, thereby enabling to hide the data. The first code generating unit 21 uses a unique encoding method to encode the encryption key and stores the encoded encryption key in the same image data, thereby ensuring that only the specified users can restore the data.

Fig. 9 is a schematic for illustrating a case in which a first code and a second code that are output separately. The image data that includes data embedded by the first code generating unit 21 and the two-dimensional code that is encoded by the second code generating unit 22 can be output separately to enhance the confidentiality of the encoded data shown in Figs. 6 to 8. As shown in Fig. 9, a portion of a product order code is encoded by using the first code generating unit 21 and output in a certificate. The remaining portion of the product order code is encoded by using the second code generating unit 22 and output in a product operation manual. The entire product order code cannot be extracted without combining the two decoding results.

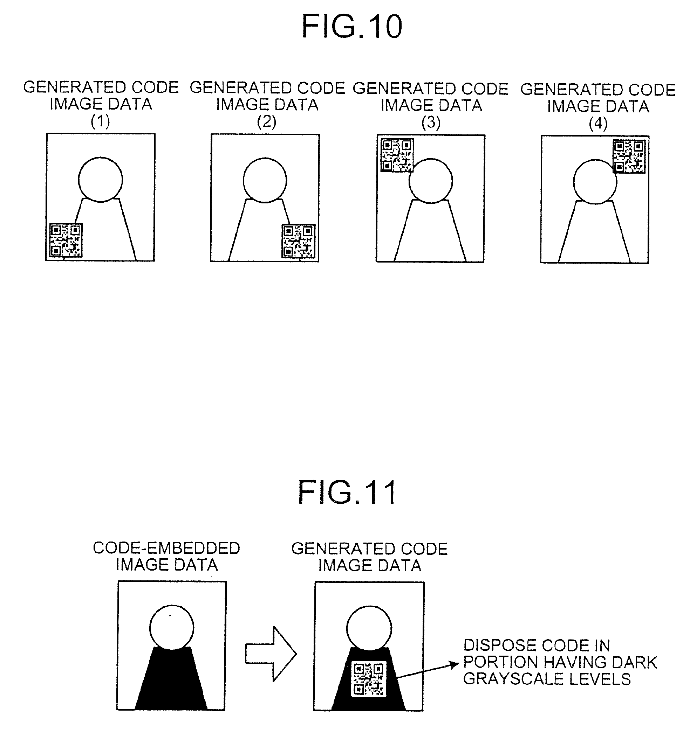

Figs. 10 and 11 are schematics for illustrating examples a disposal of a code in the encoding method according to the present embodiment.

As shown in Fig. 10, the two-dimensional code that represents the encoding result of the second code generating unit 22 is disposed along the periphery of the image data that represents the encoding result of the first code generating unit 21. In the image data, a portion that carries the meaning is usually disposed near the center. The two-dimensional code is disposed along the periphery of the image data away from the center, thereby enabling to maintain the visual meaning that is originally provided in the image.

As shown in Fig. 11, the two-dimensional code is disposed in the image data that represents the encoding result of the first code generating unit 21. The two-dimensional code is disposed in a portion of the image data having low grayscale levels. When embedding codes into the image data by using difference between average densities of adjoining blocks, it is difficult to embed data into a portion of the image data having a sharp change in the grayscale values or into a bright and dark portion that is a blind sector pertaining to an image reader. The two-dimensional code is disposed in the aforementioned portions, thereby enabling to prevent deterioration of reading accuracy pertaining to the data that is embedded by the first code generating unit 21.

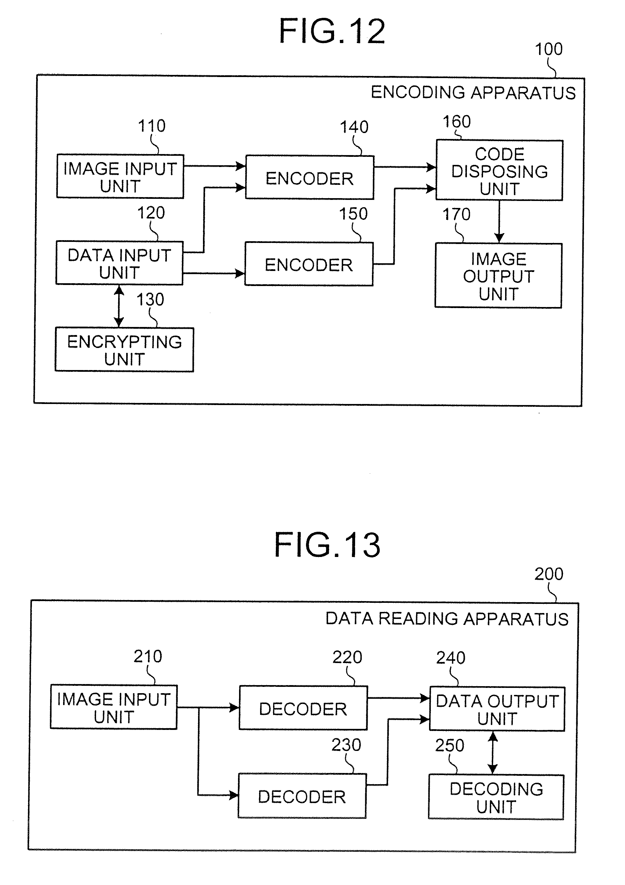

Fig. 12 is a block diagram of an encoding apparatus 100 according to the present embodiment. The encoding apparatus 100 includes an image input unit 110, a data input unit 120, an encrypting unit 130, the encoder 140, an encoder 150, a code disposing unit 160, and an image output unit 170.

The image data that stores data is input into the image input unit 110. The data input unit 120 receives input of data that is embedded into the image data input into the image input unit 110. The data input unit 120 receives input pertaining to two types of data. The data input unit 120 distributes one type of data to the encoder 140 and distributes the other type of data to the encoder 150.

The encrypting unit 130 encrypts data. The encrypting unit 130 uses as the encryption key one type of data that is input into the data input unit 120, and uses the encryption key to encrypt the other type of data. The encrypting unit 130 carries out encryption upon receiving an encryption instruction. Upon carrying out encryption, the encrypting unit 130 distributes the encrypted data to the encoder 150.

The encoder 140 embeds data that is distributed by the data input unit 120 into the image data that is input into the image input unit 110. The encoder 140 is equivalent to the first code generating unit 21. The encoder 140 is explained in detail with reference to Fig. 1. The encoder 150 encodes the data that is distributed by the data input unit 120 into the two-dimensional code. The encoder 150 is equivalent to the second code generating unit 22.

The code disposing unit 160 disposes the two-dimensional code that is encoded by the encoder 150 into the image data that includes data embedded by the encoder 140. The code disposing unit 160 is equivalent to the code disposing unit 23. When disposing the two-dimensional code, the code disposing unit 160 selects places for dispose such that a deterioration of visual meaning pertaining to the image data and a deterioration of reading accuracy pertaining to the data embedded into the image data are prevented.

The image output unit 170 outputs to a printing unit or a display device the image data that includes the embedded data and the two-dimensional code.

Fig. 13 is block diagram of a data reading apparatus 200 according to the present embodiment. The data reading apparatus 200 includes an image input unit 210, a decoder 220, a decoder 230, a data output unit 240, and a decoding unit 250.

The image input unit 210 reads the image data that is output from the encoding apparatus 100. A camera or a scanner is used as the image input unit 210. The decoder 220 extracts data embedded into the image data that is read by the image input unit 210. The decoder 230 extracts data by decoding the two-dimensional code disposed in the image data that is read by the image input unit 210.

The data output unit 240 outputs data that is extracted by the decoder 220 and the decoder 230. If required, the data output unit 240 distributes the extracted data to the decoding unit 250 to remove encryption, and outputs the data after the encryption is removed.

The data reading apparatus 200 reads both the data that is embedded into the image data and the data that is encoded into the two-dimensional code that is disposed in the image data. However, a data reading apparatus that reads only one type of data can also be construed.

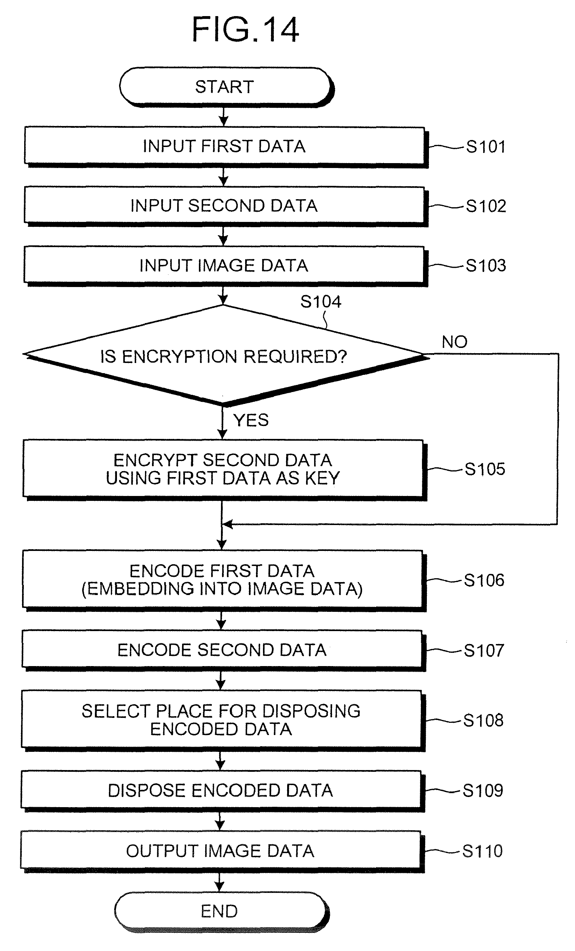

Fig. 14 is a flowchart of a processing procedure for the encoding apparatus 100 shown in Fig. 12.

A first data is input into the data input unit 120 (step S101) and next a second data is input into the data input unit 120 (step S102). The image data is input into the image input unit 110 (step S103). If encryption is required ("Yes" at step S104), the encrypting unit 130 uses the first data as the encryption key to encrypt the second data (step S105).

The encoder 140 embeds the first data into the image data (step S106), and the encoder 150 encodes the second data into the two-dimensional code (step S107). Next, the code disposing unit 160 selects a place in the image data to dispose the two-dimensional code (step S108) and disposes the two-dimensional code (step S109) in the selected place. The image output unit 170 outputs the image data that stores the first data and the second data and ends the process (step S110).

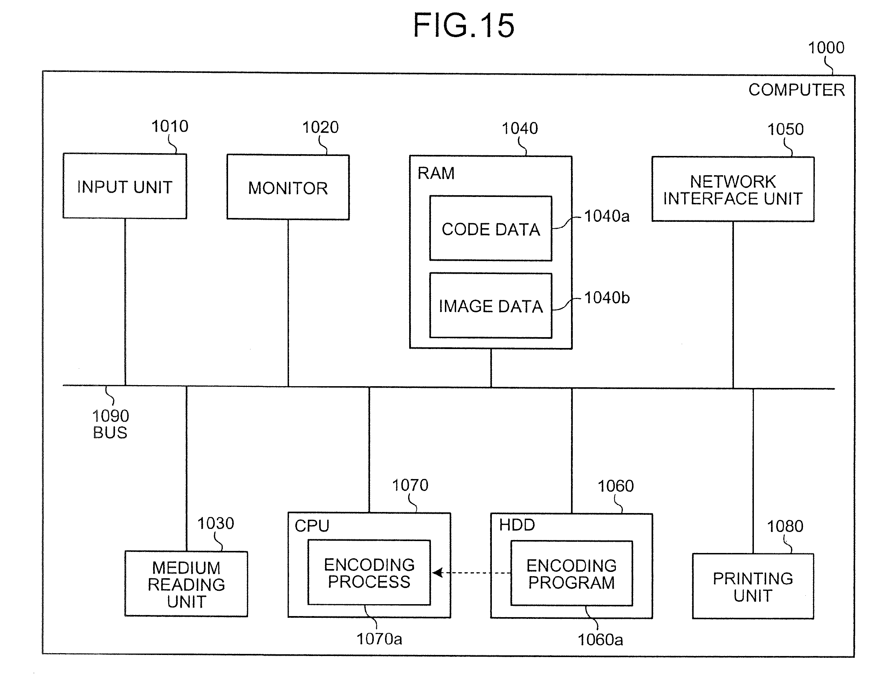

Various processes of the encoding apparatus 100 explained in the present embodiment can be realized by executing a prior formulated encoding program using a computer. An example of the computer that executes the encoding program is explained next with reference to Fig. 15.

Fig. 15 is a block diagram of a computer 1000 to execute an encoding program. The computer 1000 includes an input unit 1010 that receives input of data from the user, a monitor 1020, a medium reading unit 1030 that reads programs from a recording medium that records various programs, a random access memory (RAM) 1040 that temporarily stores various types of data, a network interface unit 1050 that carries out transfer of data between the computer 1000 and other computers via a network, a hard disk drive (HDD) 1060, a central processing unit (CPU) 1070, and a printing unit 1080 that are connected by a bus 1090.

An encoding program 1060a that includes similar functions as the functions of the encoding apparatus 100 is stored in the HDD 1060. The CPU 1070 reads the encoding program 1060a from the HDD 1060 and executes the encoding program 1060a, thereby enabling the encoding program 1060a to function as an encoding process 1070a.

The data that is input from the input unit 1010 and the medium reading unit 1030 is stored by the encoding process 1070a in the RAM 1040 as code data 1040a and image data 1040b. The encoding process 1070a uses the code data 1040a and the image data 1040b that are stored in the RAM 1040 to execute various processes.

The encoding program 1060a need not always be stored in the HDD 1060. The encoding program 1060a that is stored in a storage medium such as a compact disk-read only memory (CD-ROM) can be read by the computer 1000 and executed. The encoding program 1060a can also be stored in another computer (or server) that is connected to the computer 1000 via a public line, Internet, a local area network (LAN), a wide area network (WAN) etc., read by the computer 1000 from other computer (or server) and executed.

According to the present embodiment, data is stored in image data by using a combination of a method that uses a difference between feature quantity pertaining to combinations of blocks to represent bits and to embed data into the image data and a method that encodes data as a combination of image patterns, thereby enabling to store a large amount of data in the image data without affecting the simplicity in decoding that is a salient feature of the aforementioned methods.

According to the present invention, it is possible to secure confidentiality and accuracy of data that is stored in the image data.

Furthermore, according to the present invention, it is possible to store a large amount of data in the image data without affecting the simplicity in decoding that is a salient feature of the aforementioned methods.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. An encoding apparatus that creates an image in which data is embedded, the encoding apparatus comprising:
a first encoder that splits an image into a plurality of blocks, and embeds a first data into the image based on a difference between feature amounts in a combination of the blocks;
a second encoder that encodes a second data in a form of a combination of image patterns; and
a disposing unit that disposes the combination of image patterns in the image in which the data is embedded by the first encoder.

2. The encoding apparatus according to claim 1, wherein
the first encoder embeds a portion of data into the image, and
the second encoder encodes remaining portion of the data.

3. The encoding apparatus according to claim 1, wherein
the first encoder embeds data for detecting an error in the data encoded by the second encoder into the image.

4. The encoding apparatus according to claim 1, further comprising:
an encrypting unit that encrypts the second data using the first data as an encryption key, wherein
the second encoder encodes the second data that is encrypted by the encrypting unit.

5. The encoding apparatus according to claim 1, wherein
the disposing unit disposes the combination of image patterns in a periphery of the image in which the data is embedded by the first encoder.

6. The encoding apparatus according to claim 1, wherein
the disposing unit selects a portion of the image in which embedding of the first data is difficult based on the difference between feature amounts in a combination of the blocks, and disposes the combination of image patterns that is generated by the second encoder in the portion.

7. A decoding apparatus that extracts data embedded in an image, the decoding apparatus comprising:
a first decoder that splits the image into a plurality of blocks, and extracts a first data that is embedded into the image based on a difference between feature amounts in a combination of the blocks; and
a second decoder that extracts a second data from a combination of image patterns that is disposed in the image.

8. The decoding apparatus according to claim 7, further comprising:
a decoding unit that decodes the second data using the first data as an encryption key.

9. An encoding method of creating an image in which data is embedded, the encoding method comprising:
first encoding including
splitting an image into a plurality of blocks; and
embedding a first data into the image based on a difference between feature amounts in a combination of the blocks;
second encoding including
encoding a second data in a form of a combination of image patterns; and
disposing the combination of image patterns in the image in which the data is embedded at the first encoding.

10. A computer-readable recording medium that stores a computer program for creating an image in which data is embedded, wherein
the computer program causes a computer to execute:
first encoding including
splitting an image into a plurality of blocks; and
embedding a first data into the image based on a difference between feature amounts in a combination of the blocks;
second encoding including
encoding a second data in a form of a combination of image patterns; and
disposing the combination of image patterns in the image in which the data is embedded at the first encoding.

11. A printed material on which an image in which data is embedded is printed, wherein
the image is created by
a first encoder that splits an image into a plurality of blocks, and embeds a first data into the image based on a difference between feature amounts in a combination of the blocks;
a second encoder that encodes a second data in a form of a combination of image patterns; and
a disposing unit that disposes the combination of image patterns in the image in which the data is embedded by the first encoder.
